# EUROPEAN PATENT APPLICATION

(11) **EP 4 000 396 A1**
(43) Date of publication of application: **25.05.2022**
(21) Application number: 21202749.4
(22) Date of filing: 14.10.2021
(51) Int. Cl.: A01M 21/04

(54) **ELECTRICAL APPARATUS FOR REMOVING WEEDS AND HARMFUL PLANTS FROM THE SOIL**

(30) Priority: 12.11.2020 IT 202000027131
(71) Applicant: Agrimec 3 S.n.c. Di Baraldo Iris & C., 30029 Santo Stino di Livenza (VE) (IT)
(72) Inventor: BORASO, Dino, 30029 SANTO STINO DI LIVENZA (VE) (IT)
(74) Representative: Burchielli, Riccardo

(57) **Abstract**

An electrical apparatus for removing weeds and harmful plants from the soil, comprising at least one first bearing frame (1) and at least one air fan (3, 11), wherein the bearing frame (1) supports at least one terminal (5) equipped with at least one internal electric resistance (6) and at least one opening (8) for the escape of a flow of air. The flow of air is generated by the air fan (3, 11) and then conveyed into the terminal (5) and heated by the electric resistance (6) before being directed towards the soil through the opening (8), in order to burn weeds (7) and/or harmful plants on the soil.

## Description

This invention generally refers to an apparatus for removing weeds and harmful plants from the soil.

More particularly, the invention relates to an ecological electrical apparatus adapted to burn weeds, fungal diseases and harmful insects from agricultural soil such as vineyards, orchards, etc.; the apparatus is also adapted to carry out inter-row movements, so as to be effective for any type of soil and/or crop.

Removing weeds by burning (an activity also known as "flame weeding") is carried out with dry or humid heat and is currently carried out with different methods, including electromagnetic waves, electricity, water vapour or thermal energy, in the various forms of free flame and infrared rays.

The action of flame weeding is linked to the thermal shock caused to the weeds by the rapid passage of the flame or another heat source.

It causes a rapid rise in temperature inside the tissues of the plant to be eliminated, causing the destruction of cell membranes and coagulation of proteins, with consequent death of the plant in 1-3 days, depending on the climatic conditions, species treated and their state.

Flame weeding is applied in open field ground crops, such as corn and horticultural crops, for the fight against weeds, in orchards for controlling flora, topping and sterilising crop pathogen residues and finally, in nonagricultural areas, such as green areas, parks, gardens, roads, railways, etc.

The heat generation technique by direct flame is currently the most widespread and the apparatus provided can be of the simple type, i.e. manually operated (shoulder or wheelbarrow), more complex, carried by a tractor and connected to a three-point hitch, or self-propelled.

In particular, apparatuses that use LPG as fuel are still used, equipped with burners that are able to produce a flame having stable shape and size; the flame directly hits the soil and thus, the surface layers are heated thanks to the rapid passage of the burners.

However, the flame-weeding technique has some negative aspects that contrast with the advantages deriving from its application.

First of all, similar to chemical weeding, flame weeding has residues that are dangerous for human health and it has a significant environmental impact due to the production of water vapour and carbon dioxide; moreover, this drawback is becoming more and more relevant as this technique spreads among professionals in the sector.

Then, among the other negative aspects of flame weeding, we must consider for example, the limited effectiveness against grasses, the selective pressure exerted against species tolerant to heat treatment, the difficulties in using flame apparatuses in the vicinity of useful sensitive plants or in the presence of dry vegetation, the high operating costs, the reduced operational capacity and the associated pollution problems.

Finally, other weeding techniques, such as mowing and/or mulching, are also complex and expensive to adopt.

The aim of this invention is therefore to obviate the aforementioned drawbacks and in particular, to provide an electrical apparatus for removing weeds and harmful plants from the soil, which has a reduced environmental impact compared to the background art, while maintaining a relevant effectiveness of intervention.

Another aim of this invention is to provide an electrical apparatus for removing weeds and harmful plants from the soil, which is extremely versatile to use and which allows a considerable saving of oxidising material compared to the types of traditional apparatuses.

A further aim of the invention is to provide an electrical apparatus for removing weeds and harmful plants from the soil, which guarantees a high operating reliability while at the same time allowing compliance with the operating and operational safety procedures in general.

Not least aim of the invention is that of providing an electrical apparatus for removing weeds and harmful plants from the soil, which is easy and economical to make with respect to known techniques.

These and other aims are achieved by an electrical apparatus for removing weeds and harmful plants from the soil according to accompanying claim 1.

Other detailed technical features are given in the following claims.

Further features and advantages of this invention will be more evident from the following description referring to preferred but non-limiting embodiments of the apparatus examined, according to this invention, and from the accompanying drawings, wherein:
- Figure 1 is a schematic cross-section view of a first embodiment of the apparatus for removing weeds and harmful plants from the soil, according to this invention;
- Figure 2 is a schematic cross-section view of another embodiment of the apparatus for removing weeds and harmful plants from the soil, according to this invention;
- Figures 3 and 4 show respective schematic views of further embodiments of the apparatus for removing weeds and harmful plants from the soil, according to this invention.

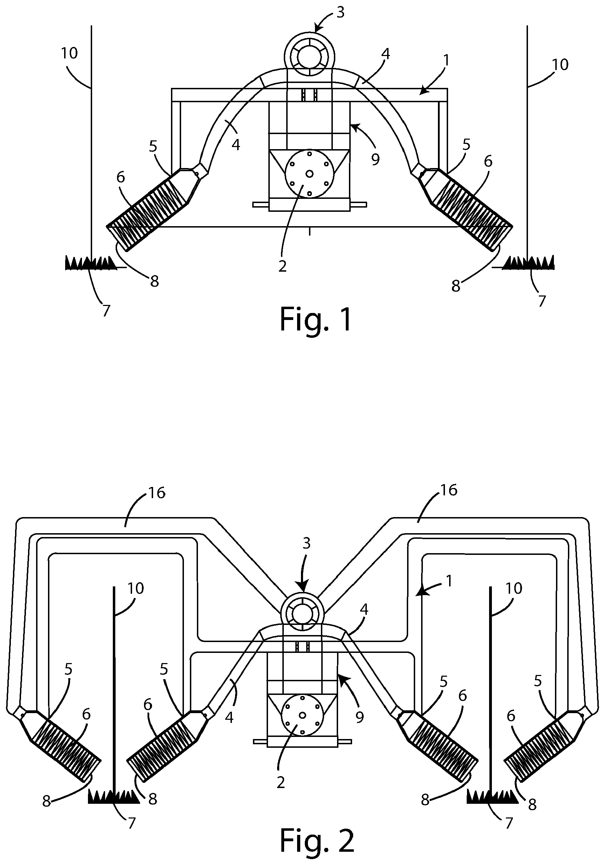

With reference to the aforementioned Figures 1 and 2, the apparatus for removing weeds and harmful plants from the soil, which is the object of the invention, comprises a bearing frame 1, preferably made of iron and arranged horizontally, to which a further frame 9, preferably arranged vertically, which supports a current generator 2, is advantageously fastened in a preferably central position and below the frame 1.

The current generator 2 is electrically connected to a fan 3 adapted to generate a flow of air and preferably the fan 3 is mounted on the same vertical frame 9 for supporting the generator 2.

At least one duct or pipe 4 is connected to the fan 3, which conducts the flow of air towards one or more shaped terminals 5, the outlet of which is directed towards the soil.

The bearing frame 1 and/or the frame 9 are made in such a way as to support the ducts 4.

Each shaped terminal 5 contains one or more electric resistances 6 adapted to heat the flow of air coming from the fan 3, and has at least one outlet opening 8 facing the soil.

In this way, the flow of air generated by the fan 3 is conveyed into the pipe 4 and then heated rapidly and at high temperature in the terminal 5 located at the end of the pipe 4.

A jet of hot air thus emerges from the outlet opening 8 of the terminal 5, which suitably directed thanks to the shaping of the terminal 5, is able to act by burning the weeds 7 and/or the harmful plants on the soil.

The terminal 5 is suitably shaped to convey the flow of hot air downwards and obtain the highest possible temperature right on the surface of the soil involved in weeding.

According to a first preferred but non-limiting embodiment of the invention, as shown in detail in attached Figure 1, the fan 3 can be placed centrally to the bearing frame 1 and can be connected to two ducts 4, placed on one side and on the other side of the fan 3 and the bearing frame 1, as well as to the frame 9.

In this way, it is possible to use the apparatus, for example between the rows 10 of a vineyard, so that at each passage, the disinfesting treatment is carried out simultaneously at the two rows 10 between which the apparatus is moved.

According to other embodiments, such as the one shown in detail in attached Figure 2, in addition to the ducts 4 of the attached Figure 1, the bearing frame 1 and/or the frame 9 can be suitably shaped to support at least a second duct 16 and in particular, further ducts 16 which are connected on one side to the fan 3 and on the other side to respective terminals 5 also equipped with electric resistances 6 and outlet openings 8. In this way, it is possible to carry out the disinfesting treatment from both sides of the row using four terminals 5 placed in pairs at the soil facing each row 10.

As shown in detail in attached Figure 2, the horizontal bearing frame 1 can be developed in height and shaped in such a way as to pass above the rows 10, also supporting the terminals 5 in a position such that the hot air from the outlets 8 is directed onto the soil, at the weeds, both on one side and on the other side with respect to each row 10.

In this way, the efficiency and effectiveness of the apparatus is increased during its movement between the rows 10 because the flow of hot air exiting the apparatus is doubled and the treatment can be carried out over a larger surface of soil.

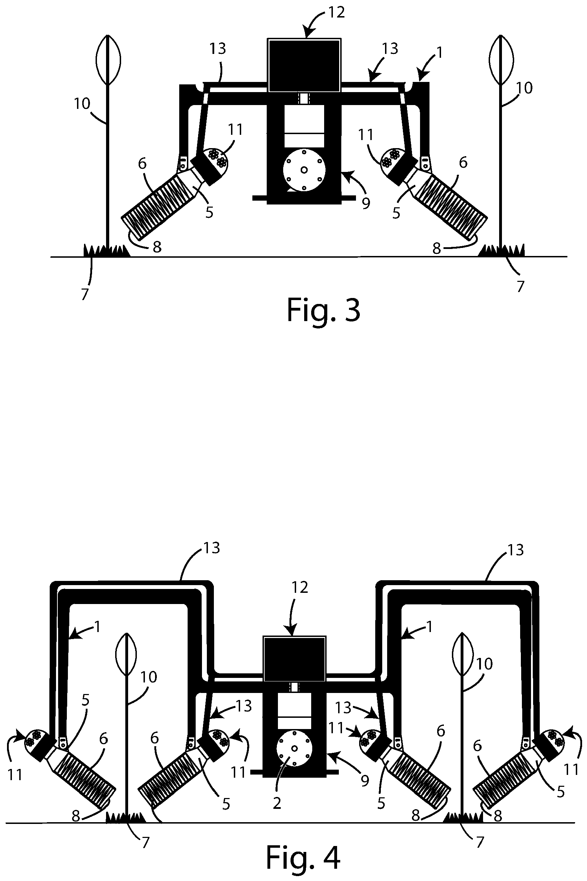

According to alternative embodiments, as shown in attached Figures 3 and 4, a respective air fan 11 directly associated with each terminal 5 is provided instead of a single air fan 3; according to this embodiment, each air fan 11 is connected by means of an electric power supply cable 13 to an electronic control unit 12 for the electric-electronic control of the fans 11. Advantageously, the electric power supply cable 13 is associated with and follows the profile of the bearing frame 1.

Again advantageously, the electronic control unit 12 is mounted in place of the fan 3, on the vertical support frame 9 of the generator 2.

The electrical apparatus the object of this invention can be used by moving it manually or it can be connected to a machine that moves it, such as a car, tractor, bulldozer.

Furthermore, it can be adjusted in height to bring the jet of hot air closer to/further from the soil, thus adapting it to the type of use.

Finally, as an alternative to the current generator 2, it is possible to use a cardan socket to supply electric current to the fan 3 and to the resistances 6.

As already mentioned above, the apparatus according to the invention is able to convey the hot air to weed only on one side or on both sides of a row 10, with respect to its direction of travel, or along the entire width by suitably rotating the terminals 5 and eventually inserting further terminals 5 complete with electric resistances 6.

Furthermore, the use of electric current for the operation of the apparatus allows further machines and/or power-operated accessories such as toppers, tipping machines, leaf strippers, etc. to be associated with such apparatus.

The features of the electrical apparatus for removing weeds and harmful plants from the soil, the object of the invention, clearly emerge from the description, as do the advantages thereof.

Lastly, it is clear that numerous other variants can be made to the apparatus in question without forsaking the principles of novelty of the inventive idea contained in the accompanying claims, as it is clear that in the practical actuation of the invention, the materials, the shapes and the dimensions of the illustrated details can be of any type according to requirements, and can be replaced by other technically equivalent elements.

## Claims

1. Electrical apparatus for removing weeds and harmful plants from the soil, **characterized in that** said apparatus comprises a first bearing frame (1) and at least one air fan (3, 11) connected to an electrical generator (2), wherein said first bearing frame (1) supports at least one terminal (5) equipped with at least one internal electric resistance (6), which is connected to said electrical generator (2), and with at least one opening (8) for the release of an air flow, said air flow being generated by said at least one air fan (3, 11) and being conveyed inside said at least one terminal (5) and being heated by said at least one electric resistance (6) before being directed towards the ground through said at least one opening (8), said air flow, once heated, being able to burn weeds (7) and/or harmful plants in the soil.

2. Electrical apparatus as claimed in claim 1, **characterized in that** said at least one air fan (3) is fixed on a second bearing frame (9), which supports said electrical generator (2).

3. Electrical apparatus as claimed in the previous claims, **characterized in that** said air fan (3) is connected to at least one first air duct (4) connected to said at least one terminal (5) and, in particular, to two first air ducts (4) which are placed on opposite sides with respect to said first bearing frame (1) and/or with respect to said second frame (9).

4. Electrical apparatus as claimed in claim 1, **characterized in that** said at least one air fan (11) is directly connected to said at least one terminal (5), said at least one air fan (11) being electrically connected, through an electric power supply cable (13), to an electronic control unit (12).

5. Electrical apparatus as claimed in claim 4, **characterized in that** said power supply cable (13) and/or said at least one first air duct (4) is/are associated and supported by said first bearing frame (1).

6. Electrical apparatus as claimed in claim 4, **characterized in that** said electronic control unit (12) is mounted on said second bearing frame (9).

7. Electrical apparatus as claimed in at least one of the previous claims, **characterized in that** said apparatus is movable between rows (10), so that, at each passage of the apparatus, a disinfesting treatment is carried out at the base of said rows (10).

8. Electrical apparatus as claimed in at least one of the previous claims, **characterized in that** said apparatus comprises at least one second air duct (16) which is connected, on one side, to said at least one air fan (3), and, on the other side, to said at least one terminal (5).

9. Electrical apparatus as claimed in at least one of the preceding claims, **characterized in that** at least a portion of said first bearing frame (1) is developed above said rows (10) and supports said at least one terminal (5), so as to direct said air flow both on one side and on the other side with respect to each row (10).

10. Electrical apparatus as claimed in at least one of the previous claims, **characterized in that** said apparatus is movable manually or is connected to a towing machine, said at least one air fan (3, 11) being electrically connected to a cardan socket which supplies electric current to said at least one air fan (3, 11) and to said at least one electric resistance (6).
